# EUROPEAN PATENT APPLICATION

(11) **EP 4 161 032 A1**
(43) Date of publication of application: **05.04.2023**
(21) Application number: 21834396.0
(22) Date of filing: 06.05.2021
(51) Int. Cl.: H04L 61/00, G06F 12/02

(54) **NETWORK PACKET-BASED REMOTE MEMORY ACCESS METHOD AND APPARATUS, AND DEVICE AND MEDIUM**

(30) Priority: 30.06.2020 CN 202010614301
(71) Applicant: ZTE Corporation, Shenzhen, Guangdong 518057 (CN)
(72) Inventor: LUO, Sheng, Shenzhen, Guangdong 518057 (CN)
(74) Representative: Savi, Massimiliano
(86) International application number: PCT/CN2021/091935
(87) International publication number: WO 2022/001360

(57) **Abstract**

A network packet-based remote memory access method and apparatus, and a device and a medium, relating to the technical field of communications. The key point of the technical solution is to: configure only a mapping table between MAC header information and destination addresses of data, and then obtain the MAC header information corresponding to a data destination address; packaging the data destination address and the MAC header information corresponding thereto, and data information, and then sending the packet to a receiving apparatus; and after receiving the packet, the receiving apparatus outputting the data information to the data destination address.

## Description

### CROSS-REFERENCE TO RELATED APPLICATION

This application is based on and claims the priority of Chinese patent application No. 202010614301.9 filed on June 30, 2020, the disclosure of which is incorporated herein by reference in its entirety.

### TECHNICAL FIELD

The present invention relates to the field of communications technologies, and in particular, to a network packet-based remote memory access method and apparatus, a device, and a medium.

### BACKGROUND

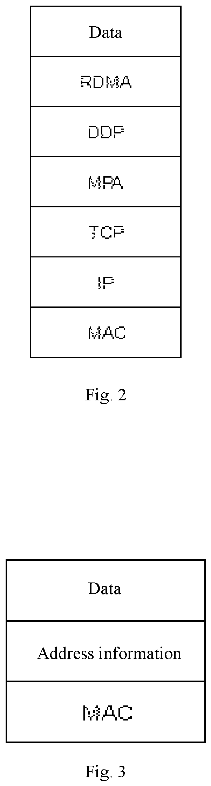

To solve the efficiency problem of data writing across shards, a mainstream method in the industry is as follows: a network processor sender encapsulates data to be sent into a network packet using the standard Remote Direct Memory Access (RDMA) protocol and transmits the network packet, and a network processor receiver parses the network packet according to the RDMA protocol and outputs the data to a destination address, as shown in Fig. 2. An implementation principle of the method is as follows: RDMA is implemented through an iWARP protocol suite, including three protocols: RDMA, Direct Data Placement (DDP), and Marker-based Protocol data unit Aligned (MPA), to ensure interoperability over high-speed networks. The RDMA layer is used to convert RDMA Read, Write and Send messages into RDMA messages and transmit the RDMA messages to the DDP layer. The DDP layer encapsulates the RDMA messages into DDP data packets and forwards the DDP data packets to the lower MPA layer. The MPA layer adds identifier, length, and Cyclic Redundancy Check (CRC) to the DDP data packets to form an MPA data segment. The Transmission Control Protocol (TCP) layer provides scheduling of TCP data segments to ensure that packets can reach destination locations successfully. The Internet Protocol (IP) layer adds necessary network routing data information in the data packets.

However, the method is complex and costly for implementation and is mainly used in the field of computer communication. Although the method solves the data copying problem related to a kernel space and a user space of a computer operating system, an RDMA device still needs to copy data from the user space of the computer operating system to an internal space of the RDMA device after receiving RDMA data read and write requests for the user space of the computer operating system.

### SUMMARY

The present invention provides a network packet-based remote memory access method and apparatus, a device, and a medium, which at least solve one of the related technical problems to some extent, including: reducing transmission logic, implementing data transmission without data copying, and reducing a bus traffic bandwidth.

An embodiment according to an aspect of the present invention provides a network packet-based remote memory access method, which includes: configuring Media Access Control (MAC) header information and destination addresses of data into a mapping table, and storing the mapping table; acquiring a data destination address of data information transmitted by a third-party component and a data length of the data destination address; comparing the data destination address and the data length of the data destination address with the destination addresses in the mapping table to acquire MAC header information corresponding to the data destination address; and outputting, by a receiving apparatus, the data information to the data destination address after receiving an assembled packet including the data destination address and the corresponding MAC header information and the data information.

An embodiment according to another aspect of the present invention provides a network packet-based remote memory access apparatus including a network processor. The network processor includes a sending apparatus and a receiving apparatus, where the sending apparatus includes a header information management unit, an address sensing unit, and a packet assembly and sending unit. The header information management unit includes a configuration component configured for configuring MAC header information of data and destination addresses into a mapping table, an internal storage component configured for storing the mapping table, and an address selection component configured for comparing the data destination address and a data length of the data destination address with the destination addresses in the mapping table to acquire MAC header information corresponding to the data destination address. The address sensing unit is configured to acquire a data destination address of data information transmitted by a third-party component and a data length of the data destination address. The packet assembly and sending unit is configured to assemble the data destination address and the corresponding MAC header information and the data information into a packet, and send the packet to the receiving apparatus. The receiving apparatus is configured to receive the data destination address and the corresponding MAC header information and the data information, and output the data information to the data destination address.

An embodiment according to yet another aspect of the present invention provides an implementation device for network packet-based remote memory access, including a memory, a processor, and a computer program stored in the memory and executable by the processor, where the computer program, when executed by the processor, causes the processor to implement the method of any one of the foregoing aspects.

An embodiment according to still another aspect of the present invention provides a computer medium, where the computer medium stores a computer program which, when executed by a processor, causes the processor to implement the method of any one of the foregoing aspects.

### BRIEF DESCRIPTION OF DRAWINGS

Fig. 1 is a flowchart of a method according to the present invention;
Fig. 2 is a schematic diagram of a packet hierarchy for RDMA in some cases;
Fig. 3 is a schematic diagram of a packet hierarchy according to the present invention;
Fig. 4 is a framework diagram of an apparatus according to the present invention;
Fig. 5 is a flowchart of packet sending and receiving according to the present invention; and
Fig. 6 is a schematic diagram of modules of one implementation of an implementation device for network packet-based remote memory access according to the present invention.

### DETAILED DESCRIPTION

The technical scheme of the present invention will be described in detail below with reference to the accompanying drawings. It should be understood that in the description of the present invention, terms such as "first" and "second" are merely for the purpose of description and should not be construed as indicating or implying relative importance or implicitly implying the number of technical features indicated, and are only used to distinguish between different components.

Third-party components include, but are not limited to, CPU and a baseband accelerator. The third-party component is in a routing connection with a sending apparatus through a bus. The bus, for example, may be an Advanced eXtensible Interface (AXI) bus featuring read/write data, read/write address, specific data lengths, etc. An internal storage component is a RAM memory configured to store a mapping table of header information and data destination address, and cache data information transmitted in a single transaction by the third-party component.

In an embodiment, packet header information includes MAC header information, and may be a combination of header information such as MAC/IP header information and MAC/IP/UDP header information, as shown in Fig. 3.

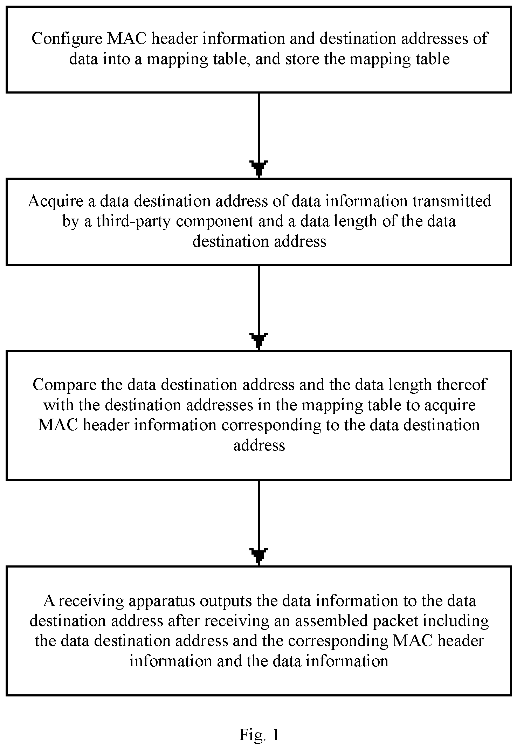

Fig. 1 is a flowchart of a method according to the present invention. As shown in Fig. 1, the network packet-based remote memory access method includes: configuring MAC header information and destination addresses of data into a mapping table, and storing the mapping table; then acquiring a data destination address of data information transmitted by a third-party component and a data length of the data destination address; comparing the data destination address and the data length of the data destination address with the destination addresses in the mapping table to acquire MAC header information corresponding to the data destination address; and outputting, by a receiving apparatus, the data information to the data destination address after receiving an assembled packet including the data destination address and the corresponding MAC header information and the data information. In an embodiment, the receiving apparatus outputs the data information to a memory corresponding to the data destination address.

In an embodiment, after the data destination address of the data information transmitted by the third-party component and the data length of the data destination address are acquired, the data information is cached.

In some implementations, a data destination address is a start address, and the data length represents an address length of the data destination address, that is, a range of the data destination address from the start address to an end address, while the mapping table also includes address ranges of destination addresses. Therefore, comparison of the data destination address and the data length of the data destination address with the mapping table is actually a determination through comparison of which ranges of destination addresses in the mapping table that the range of the data destination address falls within.

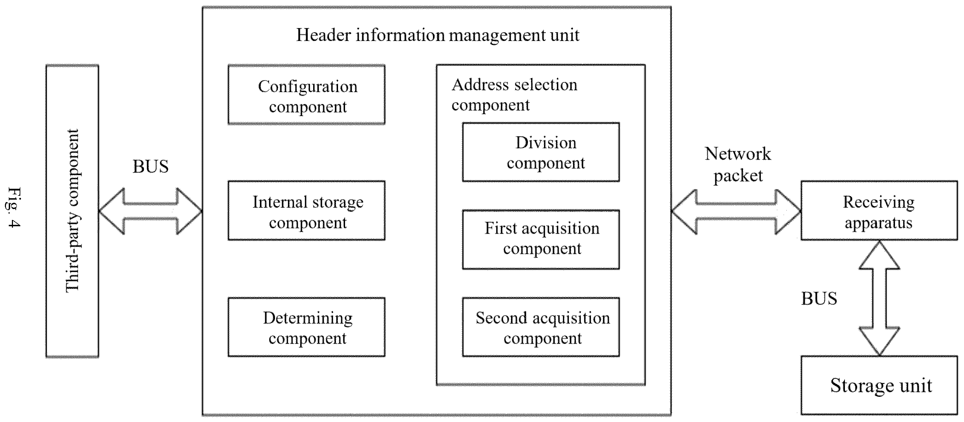

Fig. 4 is a framework diagram of the apparatus of the present invention. Functions of the components can be referred to the following embodiments of the present invention.

### Embodiment I:

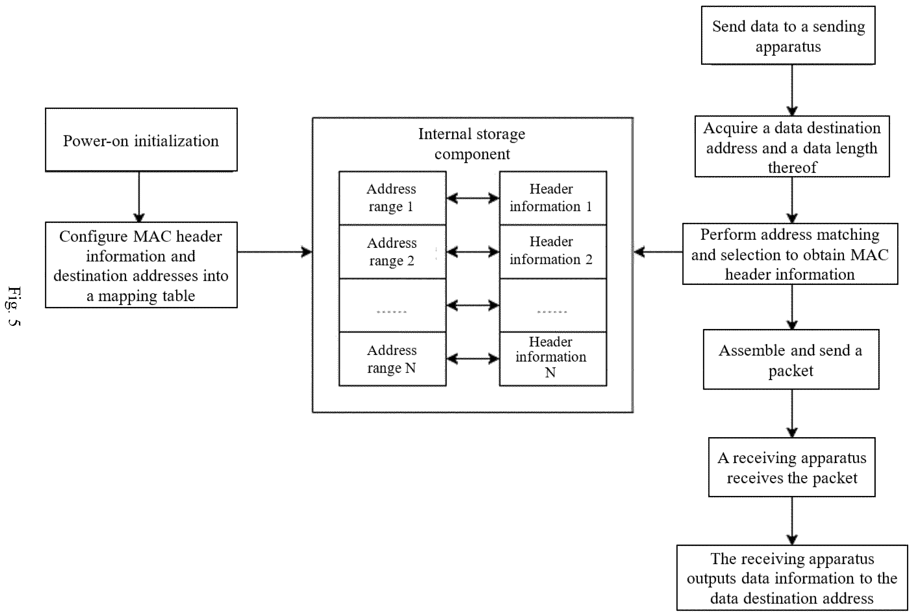

As shown in Fig. 5, power-on initialization is performed; and a configuration component of a header information management unit configures a mapping table of MAC header information and data destination addresses, and the mapping table is then stored in an internal storage component of the header information management unit. A third-party component transmits a data destination address of data information and a data length of the data destination address to a sending apparatus, and data information of individual transactions are routed to the internal storage component through the bus. An address sensing unit acquires and extracts the data destination address and the data length of the data destination address transmitted by the third-party component, and an address selection component compares the acquired information with the destination addresses in the mapping table stored in the internal storage component to obtain corresponding MAC header information.

The address selection component is mainly configured to perform address matching on the data information transmitted by the third-party component, and the address selection component includes a division component, a first acquisition component, and a second acquisition component. Before address matching begins, the division component divides all destination addresses in the mapping table into N ranges of addresses, and sequentially numbers the N ranges of addresses, where N is a positive integer greater than 1. The address matching method includes the following steps: (1) the data destination address and the data length of the data destination address are compared with the N ranges of addresses stored in the internal storage component at the same time, and the first acquisition component selects MAC header information corresponding to a specific range of addresses that the data destination address falls within; (2) in response to the data destination address falling within multiple ranges of addresses at the same time, the second acquisition component selects the smallest serial number of the ranges of addresses as a result; and (3) in response to the data destination address not falling within any of the ranges, the transaction is discarded, in which case an error interruption occurs, and an address of the transaction is reported, for example, to a software.

A packet assembly and sending unit adds MAC header information and data destination address information in the format of a network packet to the data information cached in the internal storage component and transmitted by the third-party component, and sends the network packet to a receiving apparatus through a network interface. After receiving the network packet, the receiving apparatus extracts the data destination address and the data information in the packet, and outputs the data information to the data destination address, where the data information is usually stored in a storage unit corresponding to the data destination address.

### Embodiment II:

This embodiment differs from Embodiment I in the following: the header information management unit includes a determining component, where before the data destination address and the data length of the data destination address are compared with the destination addresses in the mapping table, the determining component determines whether different data destination addresses and respective data lengths constitute a continuous address space, and combines the different data destination addresses which are determined to constitute a continuous address space, and selects the smallest data destination address as a data destination address after the combination, with a total length of these data destination addresses serving as the data length.

### Embodiment III:

This embodiment differs from Embodiment I and Embodiment II in the following: the internal storage component of Embodiment II includes a RAM memory and a CACHE memory (usually consisting of a Static Random Access Memory (SRAM)), where the RAM memory is configured to store a mapping table of MAC header information and destination address, and the CACHE memory is configured to cache data of multiple transactions transmitted by a third-party component; while the internal storage component in Embodiment I consists of only the RAM memory, and the RAM memory caches only data of a single transaction transmitted by a third-party component, so that the CACHE memory has a faster speed.

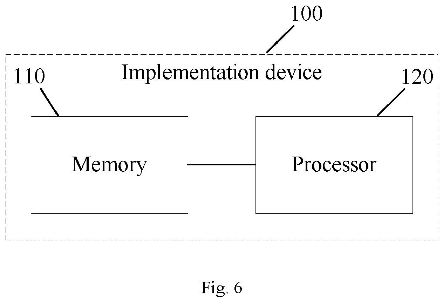

Referring to Fig. 6, an embodiment of the present invention also provides an implementation device 100 for network packet-based remote memory access, including a memory 110, a processor 120, and a computer program stored in the memory and executable by the processor, where the computer program, when executed by the processor, causes the processor to implement the method of any one of the foregoing embodiments.

The embodiments of the present invention have the following beneficial effects. (1) The implementation is simpler with lower costs, and processing logic is reduced compared with an existing RDMA mode; (2) zero copy is implemented, reducing a bus traffic bandwidth; and the sending apparatus directly receives the data transmitted by a third-party component and adds MAC header information and destination address information to the data, and data copy is not needed in the packet assembly process; and (3) time in construction of network packet header and packet assembly is shortened, as the sending apparatus directly obtains the data destination address and the MAC header information according to the information transmitted by the third-party component, and assembles these into a complete network packet.

In conclusion, the technical scheme provided by the embodiments of the present invention is simple and flexible for implementation, and those having ordinary skill can select a method for use according to an actual application scenario. The method can effectively reduce a bus traffic bandwidth and improve efficiency of packet transmission.

The foregoing descriptions are merely for some embodiments of the present invention, and the embodiments and features in the embodiments described above may be arbitrarily combined without conflict, and are not intended to limit the present invention. Various modifications and changes can be made to the present invention by those having ordinary skill in the art. Any modifications, equivalent substitutions, improvements, etc. made within the range and principle of the present invention shall fall within the scope of protection of the present invention.

## Claims

1. A network packet-based remote memory access method, comprising:
configuring Media Access Control, MAC, header information and destination addresses of data into a mapping table, and storing the mapping table;
acquiring a data destination address of data information transmitted by a third-party component and a data length of the data destination address;
comparing the data destination address and the data length of the data destination address with the destination addresses in the mapping table to acquire MAC header information corresponding to the data destination address; and
outputting, by a receiving apparatus, the data information to the data destination address after receiving an assembled packet comprising the data destination address and the corresponding MAC header information and the data information.

2. The network packet-based remote memory access method of claim 1, before the comparing the data destination address and the data length of the data destination address with the destination addresses in the mapping table, the method further comprising: determining whether different data destination addresses and respective data lengths of the data destination addresses constitute a continuous address space; and combing the different data destination addresses which are determined to constitute a continuous address space, and selecting the smallest data destination address as a data destination address after the combination.

3. The network packet-based remote memory access method of claim 2, wherein comparing the data destination address and the data length of the data destination address with the destination addresses in the mapping table comprises:
dividing the destination addresses in the mapping table into N ranges of addresses, and sequentially numbering the N ranges of addresses; in response to the data destination address falling within one of the N ranges of addresses, acquiring MAC header information corresponding to the one range of addresses; and
in response to the data destination address falling within at least two of the N ranges of addresses at the same time, selecting the range of addresses with the smallest number and the corresponding MAC header information,
wherein N is a positive integer greater than 1.

4. The network packet-based remote memory access method of any one of claims 1 to 3, wherein the data destination address is a start address, the data length is an address length of the data destination address, and the mapping table comprises ranges of addresses including the destination address.

5. A network packet-based remote memory access apparatus comprising a network processor, the network processor comprising a sending apparatus and a receiving apparatus, wherein the sending apparatus comprises a header information management unit, an address sensing unit, and a packet assembly and sending unit, the header information management unit comprising:
a configuration component configured to configure Media Access Control, MAC, header information of data and destination addresses into a mapping table;
an internal storage component configured to store the mapping table; and
an address selection component configured to compare the data destination address and a data length of the data destination address with the destination addresses in the mapping table to acquire MAC header information corresponding to the data destination address,
wherein the address sensing unit is configured to acquire a data destination address of data information transmitted by a third-party component and a data length of the data destination address;
the packet assembly and sending unit is configured to assemble the data destination address and the corresponding MAC header information and the data information into a packet, and send the packet to the receiving apparatus; and
the receiving apparatus is configured to receive the data destination address and the corresponding MAC header information and the data information, and output the data information to the data destination address.

6. The network packet-based remote memory access apparatus of claim 5, wherein the header information management unit comprises a determining component, wherein before the data destination address and the data length of the data destination address are compared with the destination addresses in the mapping table, the determining component is configured to: determine whether different data destination addresses and respective data lengths of the data destination addresses constitute a continuous address space; combine the different data destination addresses which are determined to constitute a continuous address space; and select the smallest data destination address as a data destination address after the combination.

7. The network packet-based remote memory access apparatus of claim 6, wherein the address selection component comprises:
a division component configured to divide the destination address in the mapping table into N ranges of addresses, and sequentially numbering the N ranges of addresses, wherein N is a positive integer greater than 1;
a first acquisition component configured to, in response to the data destination address falling within one of the N ranges of addresses, select MAC header information corresponding to the one range of addresses; and
a second acquisition component configured to, in response to the data destination address falling within at least two of the N ranges of addresses at the same time, select the range of addresses with the smallest number and the corresponding MAC header information.

8. The network packet-based remote memory access apparatus of claim 7, further comprising: a storage unit configured to store the data information output by the receiving apparatus to the data destination address.

9. The network packet-based remote memory access apparatus of claim 8, wherein the internal storage component comprises:
a random access memory, RAM, configured to store the mapping table; and
a CACHE memory configured to cache the data information transmitted by the third-party component.

10. The network packet-based remote memory access apparatus of any one of claims 5 to 9, wherein the data destination address is a start address, the data length is an address length of the data destination address, and the mapping table comprises ranges of addresses including the destination address.

11. An implementation device for network packet-based remote memory access, comprising a memory, a processor, and a computer program stored in the memory and executable by the processor, wherein the computer program, when executed by the processor, causes the processor to implement the method of any one of claims 1 to 4.

12. A computer-readable storage medium storing a computer program which, when executed by a processor, causes the processor to implement the method of any one of claims 1 to 4.
